# FASCICULE DE BREVET EUROPEEN

(11) **EP 0 595 085 B1**
(45) Date de publication et mention de la délivrance du brevet: **05.03.1997**
(21) Numéro de dépôt: 93116163.2
(22) Date de dépôt: 06.10.1993
(51) Int. Cl.: A47J 27/21

(54) **Bouilloire électrique**
Elektrischer Wasserkocher
Electric Kettle

(30) Priorité: 26.10.1992 FR 9212757
(43) Date de publication de la demande: 04.05.1994
(73) Titulaire: MOULINEX S.A., F-93170 Bagnolet (FR)
(72) Inventeur: Bois, Bernard, Marcel, F-14000 Caen (FR); Collas, Guy, F-14123 Ifs (FR)
(74) Mandataire: May, Hans Ulrich, Dr.

(56) Documents cités:
- EP-A- 0 419 368
- DE-A- 2 400 818
- DE-U- 9 106 751
- FR-A- 2 446 576
- GB-A- 1 408 389
- GB-A- 2 108 825

## Description

L'invention concerne une bouilloire électrique dont le boîtier ménage un réservoir qui est destiné à contenir de l'eau susceptible d'être portée à ébullition par une résistance électrique chauffante et comporte une poignée creuse qui comprend une partie de préhension ainsi qu'une embase solidaire de la paroi extérieure du réservoir, ladite résistance étant commandée électriquement par un interrupteur thermosensible disposé à l'extérieur du réservoir dans la région inférieure du boîtier et qui est sensible à la température de la vapeur acheminée par un conduit s'étendant dans l'embase longitudinalement à la paroi extérieure du réservoir, depuis la région supérieure du boitier jusqu'à l'interrupteur.

Une telle bouilloire électrique à interrupteur thermosensible est connue du document EP-A-419 368 et comporte un conduit de vapeur amenant la vapeur au-dessus dudit interrupteur pour le déclencher. Ensuite, la vapeur se propage dans la poignée et dans la partie basse de la bouilloire. Cette vapeur provoque la formation de condensation et de gouttes d'eau à l'intérieur de la bouilloire.

Le but de l'invention est de remédier à ces inconvénients en mettant en oeuvre, dans la bouilloire électrique, un moyen d'évacuation de la vapeur agissant sur l'interrupteur thermosensible.

Selon l'invention, la poignée comporte un canal d'aspiration directe de la vapeur issue du conduit, qui s'étend longitudinalement à la paroi extérieure du réservoir, dont l'entrée s'étend au-dessus de l'interrupteur et dont la sortie débouche dans la partie supérieure de la poignée d'ou la vapeur s'échappe ensuite à l'extérieur de la bouilloire à travers des trous de sortie de vapour.

Grâce à la réalisation de la bouilloire électrique selon l'invention, la formation de condensation et de gouttes d'eau est supprimée à l'intérieur de la bouilloire électrique.

D'autre part, l'aménagement d'un canal de sortie de vapeur dans la poignée de la bouilloire électrique libère un emplacement à l'intérieur de la poignée pour une implantation éventuelle de composants électriques. En effet, en évitant une propagation anarchique de la vapeur dans la totalité de la poignée, on empêche un dysfonctionnement des composants électriques dû à la vapeur d'eau.

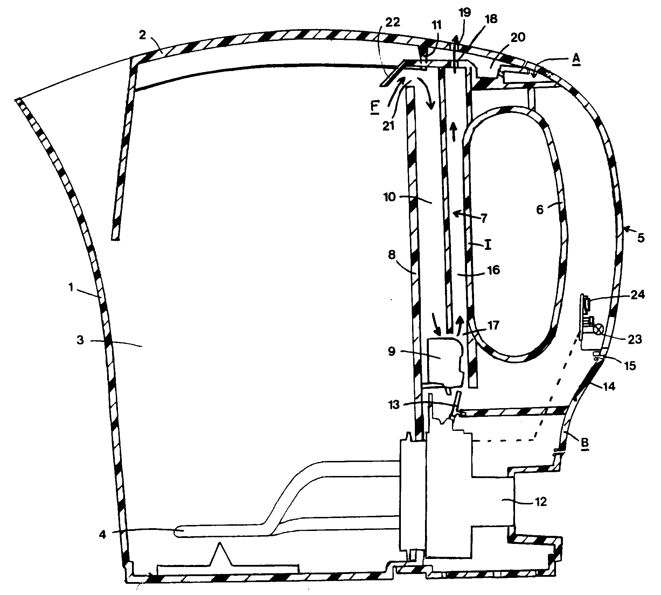

Les caractéristiques et avantages de l'invention ressortiront d'ailleurs de la description qui va suivre d'un mode de réalisation pris à titre d'exemple non limitatif illustré au dessin annexé représentant de manière schématique une coupe verticale d'une bouilloire électrique selon l'invention.

Selon la figure , la bouilloire électrique comprend un boîtier 1 fermé par un couvercle 2. Le boîtier 1 ménage un réservoir 3 qui est destiné à contenir de l'eau susceptible d'être portée à ébullition par une résistance électrique chauffante 4 et comporte une poignée creuse 5 qui comprend une partie de préhension 6 ainsi qu'une embase 7 solidaire de la paroi extérieure 8 du réservoir 3. La résistance 4 est commandée électriquement par un interrupteur thermosensible 9 qui est disposé à l'extérieur du réservoir 3 dans la région inférieure du boitier 1. L'interrupteur 9 est sensible à la température de la vapeur acheminée par un conduit 10 qui s'étend parallèlement à la paroi extérieure du réservoir 3 depuis la région supérieure du boitier 1 jusqu'à l'interrupteur 9, et dont l'embouchure 21 comporte un guide coudé 22.

Le couvercle 2 de la bouilloire électrique comporte une nervure d'étanchéité 11 qui vient en appui sur le guide 22 et qui empêche ainsi la vapeur de sortir par la partie supérieure de la bouilloire électrique.

La bouilloire électrique comporte un bloc d'alimentation électrique 12 comprenant un organe de manoeuvre 13 déplaçable entre une position "marche" et une position "arrêt" grâce à l'actionnement manuel d'une touche 14 et agencé de manière à être amené dans sa position "arrêt" lorsque la vapeur dirigée dans le conduit 10 chauffe l'interrupteur thermosensible 9 pour l'activer. La touche 14 est agencée dans une ouverture 15 ménagée dans la partie inférieure de la partie de préhension 6.

Selon l'invention, la poignée 5 de la bouilloire comporte un canal 16 de sortie de vapeur, par exemple ménagé entre une paroi intérieure I de l'embase 7 et la paroi extérieure 8 du réservoir 3. De préférence, ledit canal 16 est adjacent au conduit 10 de vapeur de manière que ce canal 16 soit à la même température que le canal 10 pour éviter une possible condensation. L'entrée 17 du canal 16 s'étend au-dessus de l'interrupteur thermosensible 9 et la sortie 18 dudit canal 16, pratiquée dans le guide 22, débouche dans la partie supérieure de la poignée 5 et vers l'extérieur à travers des trous 19 de sortie de vapeur.

Les trous 19 de sortie de vapeur sont, par exemple, réalisés dans le couvercle 2 de la bouilloire électrique à l'extérieur de la rainure d'étanchéité 11 et en regard de la sortie 18 du canal 16. La vapeur issue de la sortie 18 du canal 16 débouche dans une chambre 20 agencée entre la partie intérieure du couvercle 2 , la rainure d'étanchéité 11 et la partie supérieure de la poignée 5 , la vapeur s'échappant ensuite par les trous 19 à l'extérieur de la bouilloire.

Lesdits trous de sortie de vapeur peuvent être agencés différemment dans d'autres modes de réalisation. En effet, les trous de sortie de vapeur peuvent être réalisés, par exemple, dans une zone A de la partie supérieure de la partie de préhension 6 de la poignée 5. Dans ce cas, une canalisation non représentée, est prévue pour faire circuler la vapeur de la chambre 20 vers la zone A.

Au cours d'une utilisation, le réservoir 3 est rempli d'une certaine quantité d'eau recouvrant au moins la résistance électrique 4 et le bloc d'alimentation électrique 12 est relié à une source d'alimentation électrique non représentée. La résistance électrique 4 est commandée au moyen de la pression sur une zone B de la touche 14, ce qui provoque le déplacement de l'organe de manoeuvre 13 dans la position "marche". L'eau située dans le réservoir 3 est chauffée et , lorsque l'eau commence à bouillir, de la vapeur est produite dans l'espace situé au-dessus du niveau d'eau. Une partie de la vapeur produite est dirigée par le guide coudé 22 dans le conduit 10 par l'ouverture 21 et suit le cheminement représenté par les flèches F sur la figure. La vapeur descend dans le conduit 10 et est dirigée sur l'interrupteur thermosensible 9. Cet interrupteur 9 est actionné par la température de la vapeur et déplace l'organe de manoeuvre 13 en l'amenant dans sa position "arrêt", ce qui débranche automatiquement l'alimentation en énergie de la résistance 4. Puis, ladite vapeur est captée et remonte dans le canal 16, elle passe ensuite par la sortie 18 du canal 16, débouche dans la chambre 20 et s'évacue, par les trous 19, à l'extérieur de la bouilloire électrique. Ainsi, le canal 16 aspire la vapeur issue du conduit 10 et évite donc les formations de condensation et de gouttes d'eau dans la poignée 5 de la bouilloire électrique.

Grâce à cet échappement de la vapeur vers le haut, on comprendra que, d'une part, on évite de réaliser une étanchéité particulière et coûteuse au niveau du bloc d'alimentation 12, et, d'autre part, on peut incorporer dans la zone creuse de la partie de préhension 6 de la poignée 5, des composants électriques tels que des voyants de fonctionnement 23 ou des composants électroniques 24 de pilotage de la commande de l'alimentation électrique de la résistance 4.

## Revendications

1. Bouilloire électrique dont le boîtier (1) ménage un réservoir (3) qui est destiné à contenir de l'eau susceptible d'être portée à ébullition par une résistance électrique chauffante (4) et comporte une poignée creuse (5) qui comprend une partie de préhension (6) ainsi qu'une embase (7) solidaire de la paroi extérieure (8) du réservoir (3), ladite résistance étant commandée électriquement par un interrupteur thermosensible (9) disposé à l'extérieur du réservoir (3) dans la région inférieure du boîtier et qui est sensible à la température de la vapeur acheminée par un conduit (10) s'étendant dans l'embase (7) longitudinalement à la paroi extérieure (8) du réservoir (3), depuis la région supérieure du boîtier (1) jusqu'à l'interrupteur (9),
**caractérisée en ce que** la poignée (5) comporte un canal (16) d'aspiration directe de la vapeur issue du conduit (10), qui s'étend longitudinalement à la paroi extérieure (8) du réservoir (3), dont l'entrée (17) s'étend au-dessus de l'interrupteur (9) et dont la sortie (18) débouche dans la partie supérieure de la poignée (5) d'ou la vapeur s'échappe ensuite à l'extérieur de la bouilloire à travers des trous (19) de sortie de vapeur.

2. Bouilloire électrique selon la revendication 1,
**caractérisée en ce que** le canal (16) est ménagé entre une paroi intérieure (I) de l'embase (7) et la paroi extérieure (8) du réservoir (3).

3. Bouilloire électrique selon l'une quelconque des revendications précédentes,
**caractérisée en ce que** le canal (16) est adjacent au conduit (10) de vapeur.

4. Bouilloire électrique selon la revendication 1,
**caractérisée en ce** la partie de préhension (6) renferme des composants électriques ou électroniques (23,24).

## Claims

1. Electric kettle whose casing (1) forms a reservoir (3) which is designed to contain water able to be raised to boiling point by an electrical heating element (4) and has a hollow handle (5) which comprises a grip part (6) and a base (7) fixed to the external wall (8) of the reservoir (3), the said element being controlled electrically by a heat-sensitive switch (9) disposed outside the reservoir (3) in the lower area of the casing and which is sensitive to the temperature of the steam channelled through a pipe (10) which extends into the base (7) longitudinally to the external wall (8) of the reservoir (3), from the upper area of the casing (1) to the switch (9),
**characterised in that** the handle (5) has a direct suction channel (16) for the steam leaving the pipe (10), which extends longitudinally to the external wall (8) of the reservoir (3), whose input (17) extends above the switch (9) and whose output (18) opens out in the upper part of the handle (5), from where the steam then escapes outside the kettle through steam outlet holes (19).

2. Electric kettle according to Claim 1,
**characterised in that** the channel (16) is formed between an internal wall (I) of the base (7) and the external wall (8) of the reservoir (3).

3. Electric kettle according to any one of the preceding Claims,
**characterised in that** the channel (16) is adjacent to the steam pipe (10).

4. Electric kettle according to Claim 1,
**characterised in that** the grip part (6) encloses electrical or electronic components (23, 24).

## Patentansprüche

1. Elektrischer Wasserkocher, dessen Gehäuse (1) einen Behälter (3) bildet, der zur Aufnahme von Wasser bestimmt ist, das durch einen Heizwiderstand (4) zum Kochen gebracht werden soll, und das einen hohlen Griff (5) mit einem Griffteil (6) und einem mit der Außenwand (8) des Behälters (3) fest verbundenen Sockel (7) aufweist, wobei der Heizwiderstand elektrisch durch einen wärmeempfindlichen Schalter (9) geregelt ist, der außerhalb des Behälters (3) im unteren Bereich des Gehäuses angeordnet ist und der empfindlich auf die Temperatur des Dampfes reagiert, der durch einen Kanal (10) geleitet wird, welcher sich im Sockel (7) längs zur Außenwand (8) des Behälters (3), vom oberen Bereich des Gehäuses (1) bis hin zum Schalter (9) erstreckt,
**dadurch gekennzeichnet, daß** der Griff (5) einen Kanal (16) aufweist, welcher den aus dem Kanal (10) kommenden Dampf direkt ansaugt und sich längs zur Außenwand (8) des Behälters (3) erstreckt, wobei seine Eintrittsöffnung (17) sich oberhalb des Schalters (9) erstreckt und seine Austrittsöffnung (18) in den oberen Bereich des Griffs (5) mündet, von wo aus dann der Dampf durch Dampfaustrittslöcher (19) aus dem Wasserkocher heraustritt.

2. Elektrischer Wasserkocher nach Anspruch 1, **dadurch gekennzeichnet, daß** der Kanal (16) zwischen einer Innenwand (I) des Sockels (7) und der Außenwand (8) des Behälters (3) ausgebildet ist.

3. Elektrischer Wasserkocher nach einem der vorangehenden Ansprüche, **dadurch gekennzeichnet, daß** der Kanal (16) am Dampfleitungskanal (10) anliegt.

4. Elektrischer Wasserkocher nach Anspruch 1, **dadurch gekennzeichnet, daß** der Griffteil (6) elektrische oder elektronische Komponenten (23, 24) umschließt.
